# EUROPEAN PATENT APPLICATION

(11) **EP 0 595 097 A1**
(43) Date of publication of application: **04.05.1994**
(21) Application number: 93116418.0
(22) Date of filing: 11.10.1993
(51) Int. Cl.: F16N 7/38, F16N 39/04

(54) **Automatic greasing system**

(30) Priority: 29.10.1992 IT MI922477
(71) Applicant: FERNA GROUP INTERNATIONAL S.p.A., I-22040 Civate (CO) (IT)
(72) Inventor: Mauri, Paolo, I-22053 Lecco (IT)
(74) Representative: Petruzziello, Aldo

(57) **Abstract**

An automatic greasing system for industrial vehicles, such as lorries and suchlike and machine tools, comprising a pump (1), operated in cycles by an electromagnetic type motor (11) by means of a timer (12), for sending the grease through pipes with metering units (2), and from these to the greasing points (3) of the vehicle, in which a heating system is foreseen which exploits the heat of an electrical resistance and the metallic plaits (14) of the said connector pipes (13) between the pump and the metering units (2), in such a way as to keep the grease in condition for use, when necessary.

By means of the use of the said system and of a particular play of force of the spring located in the meters, the greasing system according to the invention is capable of using NLGI 2 type grease, even at low temperatures.

## Description

The present invention refers to a greasing system for industrial vehicles, for lorries and suchike and machine tools.

As is known, lorries have various points which must be greased periodically, at intervals which can vary according to the degree of severity of the conditions in which the lorry has to work.

For this purpose a special pump is foreseen for sending grease to the various points by means of one or more meters.

The pump can be of various types, for example pneumatic or electromagnetic.

In the electromagnetic type of pumps, to which the invention particulary refers, operation takes place by means of a timer which controls an electromagnet, which operates a piston which draws off grease from a tank to send it in circulation. The meters thrust a prearranged dose of grease to the lubrication points.

To end the lubrication cycle, the timer operates a cut-off/lock of the motor, making the pump pressure discharge by means of the motor itself, which uses one side as a blowing off valve, allowing the meters to reload for the subsequent lubrication cycle.

The main problem in known lubrication systems consists of the temperature, which in some periods of the year and in certain zones may fall to very low levels (for instance as far as -40°C), which makes the use of dense greases impossible, which for other reasons would be preferable, and causes drastic reductions in the rate of flow in the case of more fluid greases.

Another drawback with fluid greases almost in a liquid state is that their efficiency cannot be compared to that of denser greases, which causes troublesome leakages with unnecessary waste of lubricant.

The aim of the present invention is to eliminate the aforesaid drawbacks, by providing a lubrication system for industrial vehicles which works with a type 2 grease, that is a grease which is much denser and much more efficient, thus by-passing the problem of low temperatures.

This aim has been achieved by positioning a heating element in the grease pump, suitable for maintaining the grease at the temperature for use.

Opportunely heating is also foreseen of the circulation pipes for the grease of the main type.

The heating element of the pump consists of an electrical resistance preferably mounted around the grease inlet well in the motor piston, thus raising the temperature of the grease in which the motor is immersed.

Preferably the heating elements of the greasing system according to the invention are operated by a thermostat located under lock and key in the cab of the vehicle.

Further characteristics of the invention will be made clearer by the detailed description given below, referring to one of its purely exemplary and therefore not restrictive embodiments, illustrated in the appended drawings, in which:
figure 1 is a diagrammatic plan view, showing a greasing system mounted onto a lorry;
figure 2 is a diagrammatic view of a part of the lubrication circuit of the system according to the invention;
figure 3 is a partially median sectional view of the pump of the lubrication system according to the invention;
figure 4 is a plan section taken along the line IV-IV in figure 3;

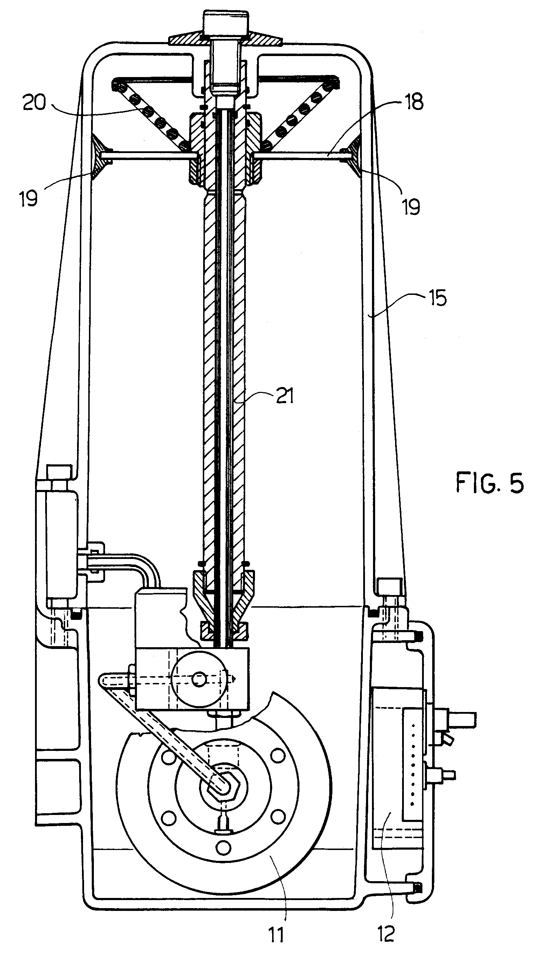

figure 5 is a partially median sectional view taken at 90° with respect to the view in figure 3;
figure 6 is an enlargement of the delivery outlet of the pump.

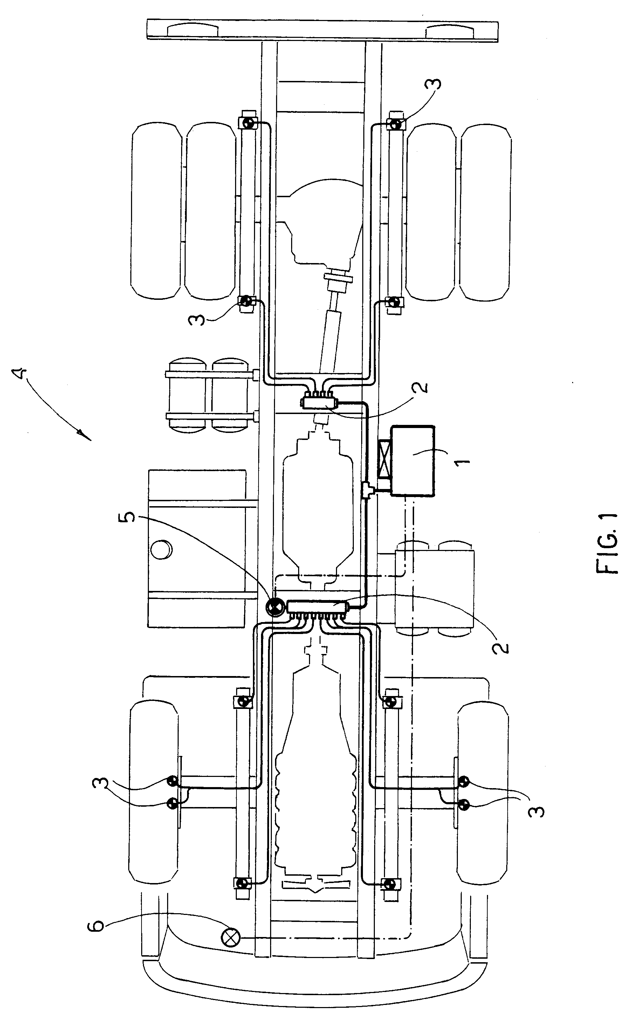

With reference to figure 1, the outline of a lorry is shown, shown as a whole with reference numeral 4 and provided with a greasing system, of which are shown a grease pump 1, two metering blocks 2 and various greasing points 3. An alarm pressure switch is indicated with 5, and an alarm lamp positioned in the driving cab with 6, for signalling any anomalies.

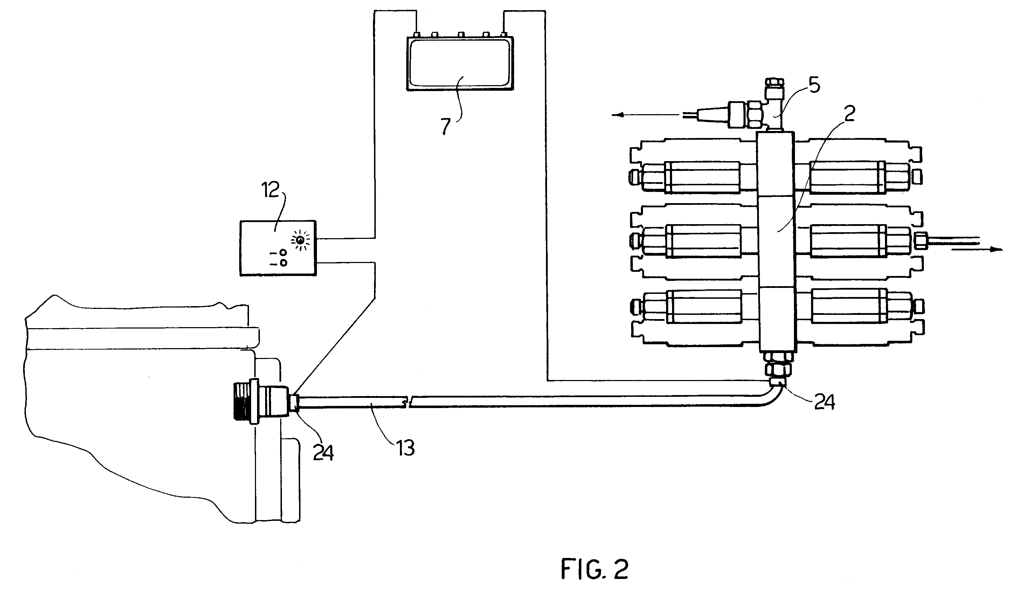

Figure 2 shows a partial enlarged view of a part of the pump 1 and a metering block 2.

A description of the pump and its working is now given below with reference to the figures from 3 to 6.

The pump 1 comprises a grease tank 15 and a pumping unit with pistons 16 located below the tank 15. Inside the tank 15, which is suitably rectangular in section, a metallic plate 18 is positioned, bordered with a double lipped sealing gasket 19, constantly pressed downwards by a pressure spring 20, acting between such plate and the upper part of the tank 25 in such a way as to exert pressure on the grease. A shaft 21, positioned axially in the tank 15, holds the plate 18 in the correct working position along all its work run.

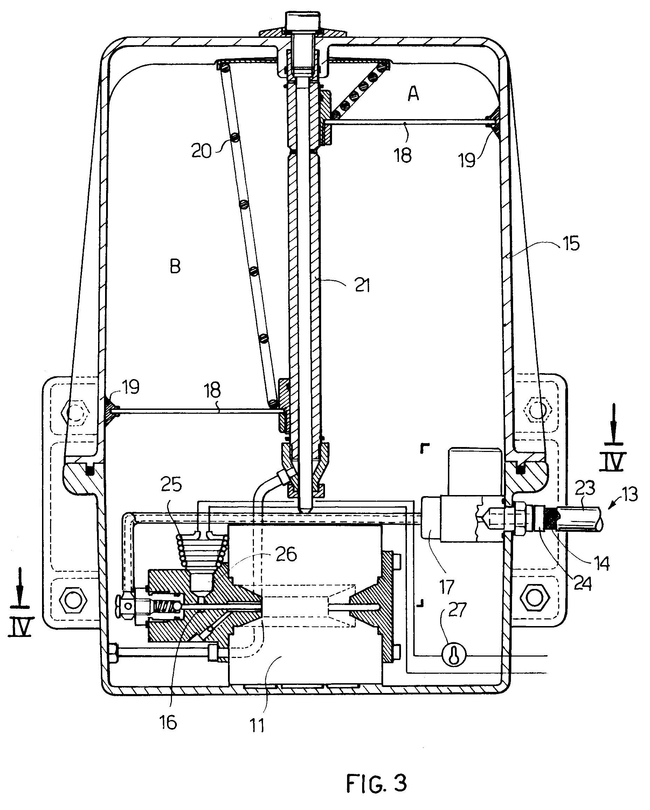

In figure 3, the plate 18 and the related spring 20, are shown in the condition where the tank is full (A) and in the condition where the tank is empty (B), in the right half and the left half respectively of the figure.

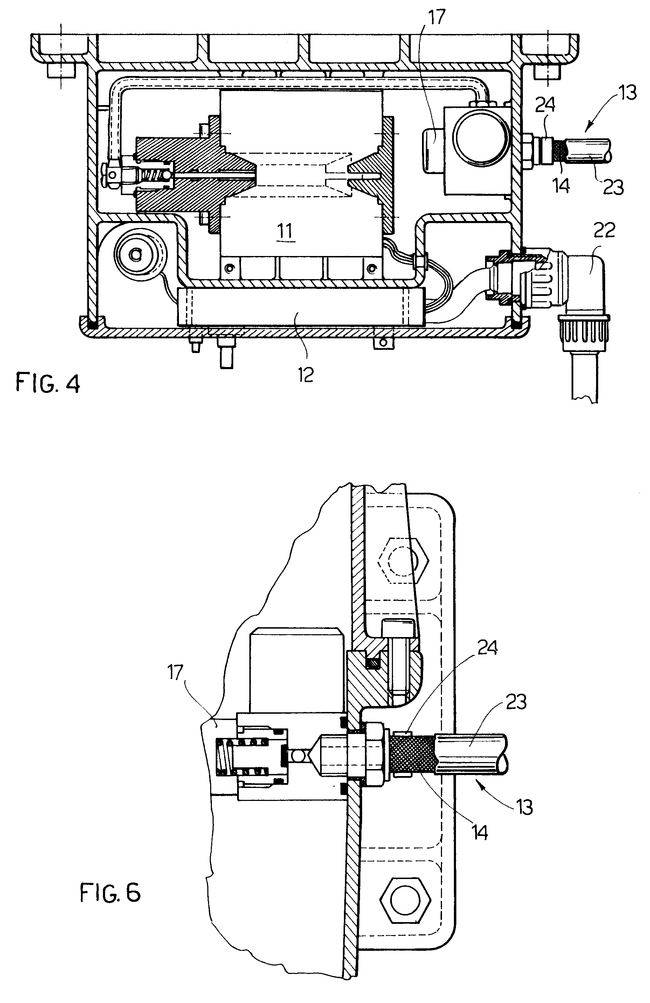

A timer 12 (figures 2 and 4) is programmed on the basis of the needs of the lorry, for the purpose of ;
1 - carrying out interventions in cycles of from 15 minutes to 4 hours and a half, each cycle preferably lasting from 5 to 10 minutes;
2 - operating the start of the heating phase at a determined time after the lorry has been started;
3 - operating the electromagnet 11 of the magnetic linear motor;
4 - operating the opening of the electromagnetic discharge valve 17.

In figure 3 the electrical connector 22 is shown for connecting the various elements which must be fed electrically.

According to the invention, heating of the grease is foreseen in the pump 1 by means of an electrical resistance 22 mounted around the grease inlet well in the motor piston.

In figure 3 a thermostat is shown with 27 for operating the resistance 25 and under lock and key in the cab of the vehicle.

As well as heating the grease in the pump 1, according to the invention heating of the grease in circulation can also be foreseen, particularly in the run which goes from the pump 1 to the metering units 2, through the pipes 13, only one of which is shown in figure 2.

For this purpose, since the grease feeder pipes 13 usually comprise an inner pipe made of polyamide, surrounded by a steel plait 14 (figure 6) and covered with a polyurethane sheath 23, it is sufficient to apply metal clamps 24 to the two ends respectively of the pipe 13, in contact with the metallic plait 14 and pass a current along the plait 14, connecting it to the battery 7, as shown in figure 2.

Obviously the heating of the motor 11 and the pipes 13 for transporting the grease is carried out in cycles, for the time needed to bring the grease to a suitable temperature, only when it is necessary, under a thermostatic type control.

From what has been shown above, the advantages of the invention can be seen clearly, since it allows the use of very dense grease, which have an efficiency much greater than the more fluid greases (practically oils) which are at present used for the same purposes.

## Claims

1. A greasing system for industrial vehicles, particularly lorries and suchlike and machine tools, comprising a pump (1), (operated by an electromagnetic linear motor (11)) controlled by a timer (12), for feeding the grease through pipes (13) to metering units (2), and from the latter to the various greasing points (3) of the vehicle, characterized in that it foresees heating elements suitable for keeping the grease at a temperature (for example of around 5°C) suitable for its use even in extremely severe outdoor climatic conditions.

2. A system according to claim 1, wherein the pump is operated by at least one electromagnetic linear motor (11) and the said heating elements comprise at least one electrical resistance (25), positioned around the grease inlet well (26) in the motor.

3. A system according to any one of the previous claims, characterized in that it also foresees heating the pipes (13) feeding the grease from the pump to the meters (2), by means of electrical supply to the metallic plait (14) foreseen in such pipes.

4. A system according to any one of the previous claims, characterized in that the said heating elements (11, 14) are activated during cyclical interventions of the pump (1) by means of the timer (12).

5. A system according to any one of the previous claims, characterized in that the timer (12) is located inside the pump unit (1).
